# EUROPÄISCHE PATENTSCHRIFT

(11) **EP 0 982 194 B1**
(45) Veröffentlichungstag und Bekanntmachung des Hinweises auf die Patenterteilung: **06.10.2004**
(21) Anmeldenummer: 99114186.2
(22) Anmeldetag: 21.07.1999
(51) Int. Cl.: B60R 16/02

(54) **Verfahren zur Ansteuerung elektrischer Verbraucher**
Procedure for controlling electric loads
Procédé pour commander des consommateurs électriques

(30) Priorität: 22.08.1998 DE 19838248
(43) Veröffentlichungstag der Anmeldung: 01.03.2000
(73) Patentinhaber: Volkswagen Aktiengesellschaft, 38436 Wolfsburg (DE)
(72) Erfinder: Rech, Bernd, Dr.-Ing., 38473 Tiddische-Hoitlingen (DE); Bäker, Bernard, 70180 Stuttgart (DE)
(74) Vertreter: Zucker, Volker, Dipl.-Ing.

(56) Entgegenhaltungen:
- DE-A- 4 422 329
- US-A- 4 942 571

## Beschreibung

Die Erfindung betrifft ein Verfahren zur Ansteuerung elektrischer Verbraucher in einem Bordnetz eines Kraftfahrzeuges, bei dem die Verbraucher in Gruppen verschiedener Prioritäten eingeteilt werden.

Ein Verfahren gemäß dem Oberbegriff des Anspruchs 1 ist beispielsweise aus der DE 44 22 329 A1 bekannt.

Kraftfahrzeuge enthalten eine Vielzahl elektrischer Verbraucher, die entweder für den Betrieb des Kraftfahrzeuges unerläßlich sind, oder die zeitweilig betrieben werden müssen, wie das beispielsweise bei der Beleuchtungseinrichtung der Fall ist. Auch enthalten Kraftfahrzeuge viele elektrische Verbraucher, die der Komfortverbesserung dienen, wie elektrische Sitzheizungen, Fensterheber, Klimaanlagen, Zentralverriegelung usw. Da alle diese Verbraucher ihre Energie nur aus dem Bordnetz beziehen können, muß beim Betrieb des Kraftfahrzeuges darauf geachtet werden, daß unter allen Betriebszuständen nur so viel Energie verbraucht wird, wie durch die Bordstromversorgung zur Verfügung gestellt werden kann. Dabei wird im allgemeinen davon ausgegangen, daß eine vorübergehende oder kurzzeitige Überlastung hingenommen werden kann. Ein solcher Fall kann beispielsweise eintreten, wenn während des Anlaßvorganges des Motors bei tiefen Außentemperaturen gleichzeitig die Beleuchtungseinrichtung in Betrieb ist.

Auch wenn im Regelfall nicht alle Verbraucher zeitgleich betrieben werden, kann es dennoch zu einer erheblichen Belastung des Bordnetzes kommen. Um zeitweilig oder auf Dauer eine Entlastung des Bordnetzes zu erreichen, sind verschiedene Lösungen und Lösungsansätze bekanntgeworden.

Eine derartige Lösung geht aus der DE 195 18 306 A1 hervor, in der eine Vorrichtung durch Steuerung einer Anzahl von untereinander kommunizierenden Aktuatoren eines Systems beschrieben wird. In dieser Druckschrift wird vorgeschlagen, eine Reduzierung des Gesamtsummenstromes dadurch zu erreichen, daß miteinander kommunizierende Aktuatoren zeitlich aufeinanderfolgend angesteuert werden. Entsprechend der in dieser Druckschrift beschriebenen Lösung werden hierzu die Zustandsinformationen von Signalgebereinheiten an Steuereinheiten und/oder die Steuersignale den Aktuatoren zeitlich versetzt zugeführt, wodurch eine zeitlich versetzte Ansteuerung der Stellelemente realisiert und damit eine Reduzierung des Gesamtstromes erreicht wird. Eine derartige Lösung kann beispielsweise für ein Zentralverriegelungssystem für Kraftfahrzeuge eingesetzt werden.

Eine andere Möglichkeit zur Reduzierung des Energieverbrauches besteht darin, einzelne elektrische Verbraucher im Kraftfahrzeug mit Hilfe von pulsweitenmodulierten Signalen (PWM-Ansteuerung) anzusteuern. Durch die Größe der Tastlücken zwischen einzelnen Signalen läßt sich der Betrag der Leistungsreduzierung durch eine Steuereinheit regulieren. Grundsätzlich können nahezu alle elektrischen Verbraucher im Kraftfahrzeug mit Hilfe pulsweitenmodulierter Signale angesteuert werden. Beispielsweise kann durch eine derartige Ansteuerung die Leistung der Sitz- oder Scheibenheizung zeitweilig oder auf Dauer reduziert werden, oder es ist möglich, konventionelle 12 V-Komponenten auch bei einer höheren Bordnetzspannung zu betreiben.

Die Verwendung pulsweitenmodulierter Signale zur Ansteuerung von Stellelementen im Kraftfahrzeug wird beispielsweise in der DE 42 18 541 A1 beschrieben.

Eine weitere Möglichkeit zur Reduzierung der Belastung des Bordnetzes besteht auch darin, während des Betriebes von elektrischen Verbrauchern mit hohem Leistungsbedarf gleichzeitig andere für den jeweiligen Betriebszustand des Kraftfahrzeuges nicht notwendige Verbraucher abzuschalten oder zumindest deren Leistungsaufnahme durch Taktung mit pulsweitenmodulierten Signalen zu reduzieren. Hierzu wird in der DE 39 36 638 C1 vorgeschlagen, die Verbraucher in Gruppen zu unterteilen und die Verbraucher dieser einzelnen Gruppen in Abhängigkeit des Ladezustandes der Batterie abzuschalten oder diesen Verbrauchern der jeweiligen Gruppe nur eine reduzierte Leistung zur Verfügung zu stellen.

Damit läßt sich eine weitgehende Sicherung der elektrischen Energieversorgung für die für den sicheren Betrieb eines Kraftfahrzeuges notwendigen elektrischen Verbraucher gewährleisten. Ansonsten wirkt sich die hier beschriebene Lösung jedoch negativ auf den Fahrkomfort aus, da hier eine Optimierung der Zuschaltung der Anzahl der dem Fahrkomfort dienenden Verbraucher nicht möglich ist, da die Sicherung der elektrischen Energieversorgung den Vorrang hat.

Angesichts dieses Standes der Technik liegt der Erfindung die Aufgabe zugrunde, ein Verfahren zur Ansteuerung elektrischer Verbraucher in einem Bordnetz zu schaffen, mit dem unter allen Betriebsbedingungen des Kraftfahrzeuges der bestmögliche Fahrkomfort gewährleistet wird.

Die Aufgabe wird gelöst durch die Merkmale des Patentanspruchs 1. Vorteilhafte Ausund Weiterbildungen sind in den Unteransprüchen dargestellt.

Erfindungsgemäß ist vorgesehen, daß die Verbraucher zusätzlich nach festgelegten Steueralgorithmen eingeteilt werden und die Ansteuerung der elektrischen Verbraucher nach einer Bewertung der Schaltungsanforderung übergeordneter Verbraucher und Freigabe der Ansteuerung entsprechend der festgelegten Steueralgorithmen unabhängig von der Bordnetzbatterieladebilanz erfolgt.

Dabei ist mindestens ein Steueralgorithmus derart ausgebildet, dass leistungsstarke elektrische Verbraucher zeitlich sequentiell getaktet in den Tastlücken gleichzeitig aktiver Verbraucher geschaltet werden. Damit wird eine Verbesserung der Batterlebilanz und damit eine Optimierung der Wiederstartfähigkeit und der Batterielebensdauer erreicht. Außerdem werden dadurch Spannungseinbrüche im Bordnetz vermieden.

Diese Ausgestaltung des erfindungsgemäßen Verfahrens ist besonders für Heizungen (z. B. Frontscheibenheizung, Heckscheibenheizung, Sitzheizung, Katalysatorheizung) oder auch für die Ansteuerung leistungsstarker elektrischer Antriebe geeignet, falls es sich nicht um sicherheitsrelevante elektrische Verbraucher handelt.

Mit diesem Verfahren wird ein neuartiges Bordnetzkonzept geschaffen, das die separate Steuerung und Überwachung der dezentralen im Fahrzeug installierten elektrischen Verbraucher ermöglicht und gleichzeitig beim Betrieb des Kraftfahrzeuges einen maximal möglichen Komfort gewährleistet.

Dabei ist vorgesehen, nicht sicherheitsrelevante elektrische Verbraucher, die zeitgleich zu aktivieren sind, zeitversetzt zu schalten. Damit lassen sich Stromspitzen im Bordnetz vermeiden, die infolge von Induktivitäten elektrischer Verbraucher oder des NTC-Verhaltens ohmscher Verbraucher auftreten können. Damit lassen sich ebenfalls die Spannungseinbrüche vermeiden und es wird eine Verbesserung der Batterieladebilanz erreicht.

Diese Ausgestaltung des erfindungsgemäßen Verfahrens ist auf alle nicht sicherheitsrelevanten elektrischen Verbraucher anwendbar, die separat schaltbar sind. Nicht einbezogen werden dürfen sicherheitsrelevante Verbraucher, wie z. B. die Bremsleuchten.

Weiterhin gehört zur erfindungsgemäßen Ausgestaltung des Verfahrens daß die elektrischen Verbraucher fahrzustandsabhängig geschaltet und bei Bedarf zeitweilig oder ständig leistungsreduziert betrieben werden. Damit wird ebenfalls eine Verbesserung der Batterieladebilanz erreicht und Strom- und Spannungsspitzen im Bordnetz vermieden. Damit besteht die Möglichkeit zur bedarfsgerechten Ansteuerung der Verbraucher und damit Strom- und Kraftstoffeinsparung aufgrund des Deaktivierens unnötiger Verbraucher und der Leistungsreduzierung der Verbraucher durch die PWM-Ansteuerung.

In weiterer Ausgestaltung des erfindungsgemäßen Verfahrens wird die Batterieladebilanz durch Bildung des momentanen Batterieladestromintegrales und Messung der Bordnetzspannung ständig überwacht und die Batteriebelastungs- und Schaltanfordungshistorie im Speicher der Steuereinheit gespeichert. Damit wird einerseits eine Verlängerung der Batterielebensdauer erreicht und andererseits die Wiederstartfähigkeit des Verbrennungsmotors gewährleistet. Extreme Spannungseinbrüche lassen sich somit sofort erkennen, so daß für Notfälle Eingriffsmöglichkeiten festgelegt werden können.

Diese Ausgestaltung der Erfindung ist für elektrische Energiespeicher des Bordnetzes geeignet, in dem zur Bestimmung der Batterieladebilanz eine Messung des Batterieladestromes einschließlich des Vorzeichens, der Batteriespannung und der Batterietemperatur erfolgt und zusätzlich eine Protokollierung einer Batteriebelastungsund Schaltanforderungshistorie erfolgt. Bei Bedarf erfolgt dann eine Abschaltung der Verbraucher nach den durch das erfindungsgemäße Verfahren vorgegebenen intelligenten Lastabwurf-Strategien.

Durch diese Ausgestaltung der Erfindung ist es außerdem möglich, eine Wiederzuschaltung der elektrischen Verbraucher nach der gespeicherten Schaltanforderungshistorie vorzusehen, falls dies möglich und sinnvoll ist.

Schließlich ist eine weitere Fortführung der Erfindung dadurch gekennzeichnet, daß bei negativer Batterieladebilanz ein Lastabwurf elektrischer nicht sicherheitsrelevanter Verbraucher entsprechend der festgelegten Klassifizierung und Prioritäten erfolgt, daß zum Ausgleich der negativen Batterieladebilanz bis zu deren Ausgleich eine Anhebung der Leerlaufdrehzahl des Motors vorgenommen wird.

Eine besondere Variante der Erfindung ist dadurch gekennzeichnet, daß für Situationen mit laufendem und nichtlaufendem Motor kritische Spannungsschwellen der Bordspannung vorgegeben werden, und daß bei Unterschreiten der vorgegebenen Spannungsschwellen während einer vorgegebenen Zeitdauer ein vorübergehender Lastabwurf nicht unbedingt notwendiger Verbraucher nach der vorgegebenen Klassifizierung und Priorität erfolgt.

Durch diese besondere Ausgestaltung der Erfindung wird der Notlauffahrbetrieb sichergestellt und damit die Betriebssicherheit des Kraftfahrzeuges erhöht.

Eine besondere Ausgestaltung der Erfindung, die dem erfindungsgemäßen Verfahren überlagert werden kann, besteht darin, daß durch die Stellung des Zündschlüssels übergeordnete Prioritäten vorgegeben werden, wobei in Stellung "0" nur solche Verbraucher betrieben werden, die unmittelbar an die Versorgungsbatterie angeschlossen sind und ständig betrieben werden müssen. In Stellung "I" beispielsweise durch Stecken des Zündschlüssels, wird nur ein Teil der Verbraucher betrieben, wie z. B. das Navigationssystem oder auch das Autoradio. In Stellung "II" werden wie üblich alle Verbraucher betrieben und in Stellung "III" erfolgt ein Kurzzeitbetrieb des Anlassers unter weitgehender Abschaltung aller übrigen Verbraucher, die nicht sicherheitsrelevant sind, wonach unmittelbar in Stellung "II" zurückgesprungen wird.

Das erfindungsgemäße Verfahren zur Ansteuerung elektrischer Verbraucher soll nachfolgend an einem Ausführungsbeispiel anhand der Einteilung der elektrischen Verbraucher in Strategiegruppen und die Festlegung von Steueralgorithmen innerhalb der Strategiegruppen anhand einer Übersichtstabelle näher erläutert werden. Darüber hinaus ist in der zugehörigen Zeichnungsfigur ein Impulsdiagramm für die PWM-Ansteuerung beispielsweise von zwei Sitzheizungen dargestellt.

Die in der nachfolgenden Tabelle aufgeführten elektrischen Verbraucher stellen jeweils eine Strategiegruppe dar, für die jeweils Steuerungsstrategien angegeben sind.

| 1. Frontscheibenwischer | 2. Heckscheibenwischer |
|---|---|
| - Beachten der Sicherheitsrelevanz | - Bei Intervallbetrieb des Frontwischers Aktivierung in der Intervallpause des Frontwischers |
| - Abschalten bei Motorstart | |
| - Bei Start-Stop-Betrieb: Betrieb bei Wiederstart und Segelphasen | |
| | - Abgeschaltet bei Motorstart |
| - Bei stehendem Fahrzeug nur Intervallbetrieb | - Bei Start-Stop-Betrieb: Betrieb bei Wiederstart und Segelphasen nur bei Zündstellung II aktiv |
| - nur bei Zündschlüsselstellung II aktiv | |

| 3. Heckscheibenheizung | 4. Gebläse |
|---|---|
| - Integrierte Timerfunktion mit automatischer Abschaltung nach 10 Minuten Betrieb | - Abschalten bei Motorstart |
| | - verzögertes Einschalten |
| | - Auswahl der zulässigen Gebläsestufe nach Energievorrat |
| - Dimmen durch PWM-Ansteuerung | |
| - Abschalten bei Motorstart | - PWM-Betrieb |
| - Außentemperaturabhängige Heizleistung und -dauer | - nur bei Zündschlüsselstellung II aktiv |
| - verzögertes Einschalten | |
| - nur bei Zündschlüsselstellung II aktiv | |
| - bei Betrieb Anhebung der Leerlaufdrehzahl | |
| - Deaktivierung für Betrieb von | |
| -Kurzzeitverbrauchern | |

| 5. Standlicht/Abblendlicht | 6. Blinker |
|---|---|
| - Standlicht bei Zündschlüsselstellung I aktiv, sonst Abblendlicht | - Intelligentes Schalten |
| | - nur bei Zündschlüsselstellung II aktiv, sonst Parklicht |
| - Nach Anlassen autom. Umschalten von Standlicht zu Abblendlicht | |
| - Intelligentes Schalten | |
| - bei Motorstart von Abblendlicht auf Standlicht zurück schalten | |
| - Bei Start-Stop-Betrieb: Betrieb bei Wiederstart und Segelphase | |

| 7. Fernlicht | 8. Innenbeleuchtung |
|---|---|
| - Ausschalten des Femlichtes, wenn Abblendlicht ausgeschaltet wird | - Intelligentes Schalten möglich |
| | - Selektives Einschalten der Leuchten in Abhängigkeit von der geöffneten Tür |
| - Nebelscheinwerfer abschalten während der Einschaltdauer des Fernlichtes | |
| - Intelligentes Schalten | - Begrenzung der Einschaltzeit bei Motorstillstand |
| - Bei Start-Stop-Betrieb: Betrieb bei Wiederstart und Segelphase | |
| - nur bei Zündstellung II | |
| - Anlasser verriegelt | |

| 9. Alarmanlage | 10. Telefon |
|---|---|
| - Deaktivierung im Fahrbetrieb | - Energiewamung in kritischer Situation |

| 11. Radio | 12. Wamblinklicht |
|---|---|
| - Garantierung der Notfunktionen | - Intelligentes Schalten möglich |
| - Abschalten bei Motorstart | |
| - Leistungsreduzierung bei negativer Energiebilanz | |
| - Zeitverzögertes Einschalten | |
| - Bei Start-Stop-Betrieb: Betrieb: Betrieb bei Wiederstart und Segelphasen | |

| 13. Bremsleuchte | 14. Signalhorn |
|---|---|
| - Wegen Sicherheitsrelevanz sofort schalten | - Wegen Sicherheitsrelevanz sofort schalten |

| 15. Kontrolleuchten | 16. Anlasser |
|---|---|
| - Wegen Sicherheitsrelevanz sofort schalten | - X-Kontakt-Funktion |
| | - nur bei Zündstellung II aktiv |

| 17. Spritzdüsenheizung | 18. Bordsteckdose |
|---|---|
| - Sicherheitsrelevanz: Dauerbetrieb nötig | - Abschalten bei Motorstart |
| - Außentemperaturabhängige Heizleistung | - nur bei Zündstellung II aktiv |
| - nur bei Zündschlüsselstellung II aktiv | - Warnung bei Drehzahl 0 |
| | - Sensierung des Laststromes |

| 19. GPS-Navigation | 20. Klimaanlage |
|---|---|
| - Separate Notlaufstrategie, abhängig von realisierten Funktionen wie z.B. Notruf | - Leistungsanpassung an Außentemperatur |
| | - Abschalten bei Motorstart |
| | - nur bei Zündstellung II aktiv |

| 21. Stellmotoren | 22. Rückfahrleuchte |
|---|---|
| - Betrifft: Fenster, Sitze, Spiegelverstellungen, Schiebedach, Niveauregulierung etc. | - sicherheitsrelevant, keine Verzögerung |
| | - nur bei Zündschlüsselstellung II aktiv |
| - Verriegelung gegeneinander | |
| - Abschalten bei Motorstart | |
| - Stromsensierung durch Halbleiterschalter | |
| - Fenster/Schiebedach: Schließen von Motorschaltung | |
| - nur bei Zündschlüsselstellung II aktiv | |

| 23. Nebelscheinwerfer | 24. Nebelschlußleuchte |
|---|---|
| - abgeschaltet bei aktiviertem Fernlicht | - Nur bei aktivierten Nebelscheinwerfern |
| - Ausschalten der Nebelscheinwerfer beim Deaktivieren des Abblendlichtes nur bei Zündschlüsselstellung II aktiv | - Ausschalten der Nebelschlußleuchte beim Deaktivieren des Abblendlichtes und der Nebelscheinwerfer |
| - Abschalten bei Motorstart | - Hochdimmen beim Einschalten |
| | - nur bei Zündschlüsselstellung II aktiv |
| | - Abschalten bei Motorstart |

| 25. Zentralverriegelung | 26. Antennenverstärker |
|---|---|
| - Abschalten anderer Kurzzeit-Hochlast-Verbraucher (Stellmotoren s.o.) für die Schließzeit | - Abschalten bei deaktiviertem Radio |
| | - Abschalten bei Motorstart nur bei Zündschlüsselstellung II aktiv |
| - sequentielles Schließen | |
| - 2-Stufen Öffnen: 1-nur Fahrertür, weiterdrehen des Schlüssels bewirkt erst das Öffnen der Zentralverriegelung | |
| - "weiches Schließen" durch intelligente Ansteuerung | |

| 27. Innenraumzusatzheizung | 28. Komfortfunktionen |
|---|---|
| - Timerfunktion | - Umschalten zwischen Parkleuchte und Blinker je nach Zündschlüsselstellung |
| - PWM-Ansteuerung in Abhängigkeit von der Kühlwassertemperatur nur bei Zündschlüsselstellung II aktiv | |
| | - Abblendlicht aktivieren bei Einschalten der Nebelscheinwerfer |

| 29. Heizungen | 30. Standheizung (explizit) |
|---|---|
| - Frontscheibe (evtl. unter 42 V), Außenspiegel, Sitz, Heckscheibenheizung, elektr. Innenraumzusatzheizung | - Timerfunktion |
| | - Batteriebilanzbetrachtung für Wiederstartgarantie |
| | - Abschalten bei Motorstart |
| - Timerfunktion | |
| - abhängig von Außentemperatur | |
| - Abschalten bei Motorstart | |
| - Prioritäten untereinander | |
| - PWM-Betrieb | |
| - wechselndes Schalten der Heizungen | |
| - bei Sitzheizung: Belegungserkennung | |
| - nur bei Zündschlüsselstellung II aktiv | |

Unter dem Begriff "intelligentes Schalten", der in der vorstehenden Tabelle verwendet worden ist, ist ein sequentielles oder zeitverzögertes Schalten nach den angegebenen Schaltstrategien zu verstehen.

Weiterhin werden folgende Zündschlüsselstellungen unterschieden:
- Stellung 0:: Stromversorgung nur für Verbraucher, die unmittelbar an die Versorgungsbatterie angeschlossen sind und ständig betrieben werden müssen (beispielsweise Infrarot-Türöffnungssyteme).
- Stellung I:: Stromversorgung für nur einen Teil der Verbraucher, zum Beispiel das Radio durch Stecken des Zündschlüssels.
- Stellung II:: Stromversorgung aller Verbraucher, Fahrbetrieb
- Stellung III:: Kurzzeitbetrieb: Starten des Motors durch Anlasserbetrieb, dann Rücksprung auf Stellung 11

Die Einteilung der Verbraucher in Strategiegruppen und die nach der vorstehenden Tabelle festgelegten Steueralgorithmen werden im Speicher der zentralen Steuereinheit abgelegt und gleichzeitig der jeweils aktuelle Zustand der elektrischen Verbraucher gespeichert. Unter Berücksichtigung der Steueralgorithmen können Schaltanforderungen von übergeordneten Bedieneinheiten nach dem Zustand des Fahrzeuges und der entsprechenden Verbraucher unter Berücksichtigung der Batterieladebilanz bewertet und durchgeführt bzw. abgelehnt werden. Durch die zentrale Speicherung der Algorithmen ist es möglich, daß die Algorithmen aller Strategiegruppen gleichzeitig abgearbeitet werden können, so daß die zur Verfügung stehende elektrische Energie optimal genutzt werden kann, wodurch gleichzeitig der bestmögliche Komfort sichergestellt wird.

Nicht dabei sicherheitsrelevante elektrische Verbraucher, die zeitgleich zu aktivieren sind, werden erfindungsgemäß zeitversetzt geschaltet. In der zugehörigen Zeichnungsfigur ist ein Beispiel einer zeitversetzten Ansteuerung von zwei Sitzheizungen in Form eines Leistungs-/Zeitdiagrammes (Pₑₗ/t) dargestellt. Hierbei wird jede Sitzheizung durch PWM-Ansteuerung in der Weise betrieben, daß die Ansteuerung der Sitzheizung 2 jeweils in den Tastlücken der Sitzheizung 1 erfolgt. Die impulsweise Ansteuerung der elektrischen Verbraucher (1, 2) erfolgt hier in der Tastlücke des jeweils anderen Verbrauchers (1, 2). Damit wird es möglich, verschiedene Heizungen oder andere Verbraucher gleichzeitig zu betreiben.

Damit lassen sich Stromspitzen im Bordnetz vermeiden, die infolge von Induktivitäten elektrischer Verbraucher oder des NTC-Verhaltens ohmscher Verbraucher auftreten können. Damit lassen sich ebenfalls Spannungseinbrüche vermeiden, und es wird eine Verbesserung der Batterieladebilanz erreicht.

Weiterhin werden alle elektrischen Verbraucher fahrzustandsabhängig geschaltet und bei Bedarf zeitweilig oder ständig leistungsreduziert betrieben, soweit diese nicht sicherheitsrelevant sind. Damit wird ebenfalls eine Verbesserung der Batterieladebilanz erreicht und Strom- und Spannungsspitzen im Bordnetz vermieden. Damit kann eine bedarfsgerechte Ansteuerung der Verbraucher und damit Strom- und Kraftstoffeinsparung aufgrund des Deaktivierens unnötiger Verbraucher erreicht werden.

Darüber hinaus wird die Batterieladebilanz durch Bildung des momentanen Batterieladestromintegrales und Messung der Bordnetzspannung ständig überwacht und die Batteriebelastungs- und Schaltanforderungshistorie im Speicher der zentralen Steuereinheit gespeichert. Damit wird einerseits eine Verlängerung der Batterielebensdauer erreicht, und andererseits die Widerstandsfähigkeit des Verbrennungsmotors gewährleistet. Extreme Spannungseinbrüche lassen sich somit sofort erkennen, so daß für Notfälle Eingriffsmöglichkeiten festgelegt werden können.

Durch die Speicherung der Batteriebelastungs- und Schaltanforderungshistorie ist es außerdem möglich, eine Wiederzuschaltung der elektrischen Verbraucher nach der gespeicherten Schaltanforderungshistorie vorzusehen, falls dies möglich und sinnvoll ist.

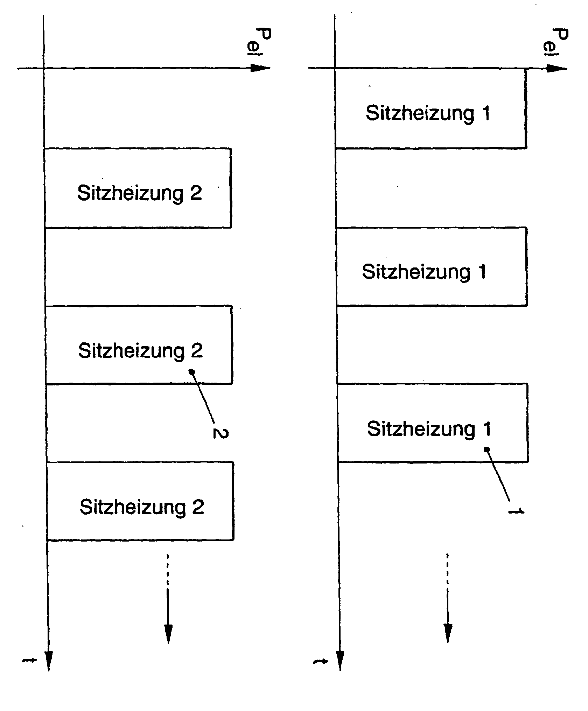

## Patentansprüche

1. Verfahren zur Ansteuerung elektrischer Verbraucher (1, 2), die bei Bedarf zeitweilig oder ständig leistungsreduziert in einem Bordnetz eines Kraftfahrzeuges betrieben werden, bei dem die Verbraucher (1, 2) in Bezug auf deren Energieversorgung in Gruppen verschiedener Prioritäten eingeteilt werden, die Verbraucher (1, 2) zusätzlich in Strategiegruppen nach festgelegten Steueralgorithmen eingeteilt werden, wobei die den Verbrauchern (1 ,2) zugeordneten Steueralgorithmen in einer zentralen Steuereinheit abgelegt sind und ein jeweils aktueller Zustand der elektrischen Verbraucher (1, 2) in der zentralen Steuereinheit gespeichert wird, wobei die Ansteuerung der elektrischen Verbraucher (1, 2) nach einer Bewertung der Schaltungsanforderung übergeordneter Bedieneinheiten, in Abhängigkeit vom Fahrzustand des Kraftfahrzeugs, unter Berücksichtigung der Bordnetzbatterieladebilanz und einer Freigabe der Ansteuerung entsprechend der festgelegten Steueralgorithmen erfolgt, **dadurch gekennzeichnet, dass** mindestens einzelnen Verbrauchem Steueralgorithmen zugeordnet sind, die in Abhängigkeit vom Fahrzustand des Kraftfahrzeuges unabhängig von der Bordnetzbatterieladebilanz bei der Ansteuerung der Verbraucher durchgeführt werden, wobei mittels mindestens eines Steueralgarithmus leistungsstarke elektrische Verbraucher zeitlich sequentiell getaktet in den Tastlücken gleichzeitig aktiver Verbraucher geschaltet werden, sodass sich damit eine Verbesserung der Batteriebilanz und damit eine Optimierung der Wiederstartfähigkeit und der Batterielebensdauer ergibt.

2. Verfahren nach Anspruch 1, **dadurch gekennzeichnet, dass** zumindest eine Gruppe der elektrischen Verbraucher (1, 2) durch pulsweitenmodulierte Ansteuerung zeitversetzt angesteuert wird.

3. Verfahren nach Anspruch 2, **dadurch gekennzeichnet, dass** wenigstens zwei elektrische Verbraucher (1, 2) zeitversetzt betrieben werden, indem einer der Verbraucher in einer Tastlücke der PWM-Ansteuerung des jeweils anderen elektrischen Verbrauchers (1, 2) angesteuert wird.

4. Verfahren nach einem der vorhergehenden Ansprüche, **dadurch gekennzeichnet, dass** mindestens ein elektrischer Verbraucher (1, 2) mit reduzierter Leistung betrieben wird.

5. Verfahren nach einem der vorhergehenden Ansprüche, **dadurch gekennzeichnet, dass** nicht sicherheitsrelevante elektrische Verbraucher (1, 2), die zeitgleich zu aktivieren sind, zeitversetzt geschaltet werden.

6. Verfahren nach einem der vorhergehenden Ansprüche, **dadurch gekennzeichnet, dass** bei negativer Batterieladebilanz ein Lastabwurf elektrischer nicht sicherheitsrelevanter Verbraucher (1, 2) entsprechend den festgelegten Steueralgorithmen und/oder Prioritäten erfolgt.

7. Verfahren nach einem der vorhergehenden Ansprüche, **dadurch gekennzeichnet, dass** bei negativer Batterieladebilanz bis zu deren Ausgleich eine Anhebung der Leerlaufdrehzahl des Kraftfahrzeugmotors vorgenommen wird.

8. Verfahren nach einem der vorhergehenden Ansprüche, **dadurch gekennzeichnet, dass** Batterieladebilanz durch Bildung des momentanen Batterieladestromintegrals und Messung der Bordnetzspannung ständig überwacht und die Batteriebelastungs- und Schaltungsanforderungshistorie im Speicher der zentralen Steuereinheit gespeichert wird.

9. Verfahren nach einem der vorhergehenden Ansprüche, **dadurch gekennzeichnet, dass** für Situationen mit laufendem Motor und nicht laufendem Motor kritische Spannungsschwellen der Bordspannung vorgegeben werden und dass bei Unterschreiten der vorgegebenen Spannungsschwellen während einer vorgegebenen Zeitdauer ein vorübergehender Lastabwurf nicht unbedingt notwendiger Verbraucher (1, 2) nach den vorgegebenen Steueralgorithmen und/oder Prioritäten erfolgt.

## Claims

1. Method for actuating electric loads (1, 2) which are, when necessary, temporarily or continuously operated with reduced power in an on-board vehicle electrical system of a motor vehicle in which the loads (1, 2) are divided, with respect to their power supply, into groups with different priorities, and the loads (1, 2) are additionally divided into strategy groups according to fixed control algorithms, the control algorithms which are assigned to the loads (1, 2) being stored in a central control unit and a respective current state of the electric loads (1, 2) being stored in the central control unit, the electric loads (1, 2) being actuated after an evaluation of the switching request of superordinate operator control units, as a function of the driving state of the motor vehicle, taking into account the on-board vehicle electrical system battery charge balance and taking into account enabling of the actuation in accordance with the defined control algorithms, **characterized in that** control algorithms which are carried out as a function of the driving state of the motor vehicle and independently of the on-board vehicle electrical system battery charge balance during the actuation of the loads are assigned at least to individual loads, high-power electric loads being switched by means of at least one control algorithm in a sequentially clocked fashion in the interpulse spaces of simultaneously active loads, with the result that the battery balance is thus improved and the re-starting capability and the service life of the battery are thus optimized.

2. Method according to Claim 1, **characterized in that** at least one group of the electric loads (1, 2) is actuated with staggered timing by means of pulse-width-modulated actuation.

3. Method according to Claim 2, **characterized in that** at least two electric loads (1, 2) are operated with staggered timing **in that** one of the loads is actuated in an interpulse space of the pulse-width-modulation actuation of the respective other electric load (1, 2).

4. Method according to one of the preceding claims, **characterized in that** at least one electric load (1, 2) is operated with reduced power.

5. Method according to one of the preceding claims, **characterized in that** non-safety-related electric loads (1, 2) which are to be activated simultaneously are switched with staggered timing.

6. Method according to one of the preceding claims, **characterized in that**, when there is a negative battery charge balance, load shedding of electric loads (1, 2) which do not relate to safety is carried out in accordance with the defined control algorithms and/or priorities.

7. Method according to one of the preceding claims, **characterized in that**, when there is a negative battery charge balance, the idling speed of the internal combustion engine is increased until said balance is compensated.

8. Method according to one of the preceding claims, **characterized in that** the battery charge balance is continuously monitored by forming the battery charge current integral at a particular time and measuring the on-board vehicle electrical system voltage, and the history of the battery loads and switching requests is stored in the memory of the central control unit.

9. Method according to one of the preceding claims, **characterized in that** critical voltage thresholds of the on-board vehicle electrical system voltage are predefined for situations with the engine running and the engine not running, and **in that**, when the predefined voltage thresholds are undershot during a predefined time period, temporary load shedding of loads (1, 2) which are not absolutely necessary is carried out according to the predefined control algorithms and/or priorities.

## Revendications

1. Procédé pour commander des appareillages électriques (1, 2), qui sont utilisés temporairement ou en permanence, suivant le besoin, dans un réseau de bord d'un véhicule automobile, avec lequel les appareillages (1, 2) sont répartis en groupes de différentes priorités en fonction de leur alimentation en énergie, les appareillages (1, 2) étant en plus répartis en groupes stratégiques d'après les algorithmes de commande définis, l'algorithme de commande associé aux appareillages (1, 2) étant stocké dans une unité de commande centrale et un état à chaque fois actuel des appareillages électriques (1, 2) étant enregistré dans l'unité de commande centrale, la commande des appareillages électriques (1, 2) s'effectuant après une évaluation de la demande de commutation des unités de commandes hiérarchiquement supérieures en fonction de l'état de déplacement du véhicule automobile en tenant compte du bilan de charge de la batterie du réseau de bord et d'une validation de la commande en fonction des algorithmes de commande définis, **caractérisé en ce que** des algorithmes de commande sont associés au moins à des appareillages individuels qui sont exécutés en fonction de l'état de déplacement du véhicule automobile indépendamment du bilan de charge de la batterie du réseau de bord lors de la commande des appareillages, les appareillages électriques puissants étant commutés séquentiellement dans le temps au moyen d'au moins un algorithme de commande dans les intervalles cycliques des appareillages actifs simultanément de manière à obtenir ainsi une amélioration du bilan de la batterie et ainsi une optimisation de l'aptitude au redémarrage et de la durée de vie de la batterie.

2. Procédé selon la revendication 1, **caractérisé en ce qu'**au moins un groupe d'appareillages électriques (1, 2) est commandé avec un décalage dans le temps par une commande modulée en largeur d'impulsion.

3. Procédé selon la revendication 2, **caractérisé en ce qu'**au moins deux appareillages électriques (1, 2) fonctionnent avec un décalage dans le temps **en ce que** l'un des appareillages est commandé pendant un intervalle cyclique de la commande PWM de l'autre appareillage électrique (1, 2) correspondant.

4. Procédé selon l'une des revendications précédentes, **caractérisé en ce qu'**au moins un appareillage électrique (1, 2) fonctionne à une puissance réduite.

5. Procédé selon l'une des revendications précédentes, **caractérisé en ce que** les appareillages électriques (1, 2) sans importance pour la sécurité et qui doivent être activés simultanément sont commutés avec un décalage dans le temps.

6. Procédé selon l'une des revendications précédentes, **caractérisé en ce qu'**en cas de bilan de charge négatif de la batterie, il se produit un délestage des appareillages électriques (1, 2) sans importance pour la sécurité en fonction des algorithmes de commande et/ou des priorités définis.

7. Procédé selon l'une des revendications précédentes, **caractérisé en ce qu'**en cas de bilan de charge négatif de la batterie, il se produit une augmentation du régime de ralenti du moteur du véhicule automobile jusqu'à sa compensation.

8. Procédé selon l'une des revendications précédentes, **caractérisé en ce que** le bilan de charge de la batterie est contrôlé en permanence en calculant l'intégrale momentanée du courant de charge de la batterie et en mesurant la tension du réseau de bord et l'historique de la charge de la batterie et des demandes de commutation est enregistré dans la mémoire de l'unité de commande centrale.

9. Procédé selon l'une des revendications précédentes, **caractérisé en ce que** des seuils de tension critiques de la tension de bord sont prédéfinis pour les situations où le moteur tourne et où le moteur ne tourne pas et que lorsque la tension devient inférieure aux seuils de tension prédéfinis pendant une durée prédéfinie, il se produit un délestage anticipé des appareillages (1, 2) qui ne sont pas absolument nécessaires d'après les algorithmes de commande et/ou les priorités prédéfinis.
